# EUROPEAN PATENT SPECIFICATION

(11) **EP 2 144 167 B1**
(45) Date of publication and mention of the grant of the patent: **18.07.2012**
(21) Application number: 07742622.9
(22) Date of filing: 27.04.2007
(51) Int. Cl.: G06F 12/00, G06F 11/20

(54) **REMOTE FILE SYSTEM, TERMINAL DEVICE, AND SERVER DEVICE**
FERNDATEISYSTEM, ENDGERÄTEEINRICHTUNG UND SERVEREINRICHTUNG
SYSTÈME DE FICHIER À DISTANCE, DISPOSITIF DE TERMINAL, ET DISPOSITIF DE SERVEUR

(43) Date of publication of application: 13.01.2010
(73) Proprietor: Fujitsu Limited, Kawasaki-shi, Kanagawa 211-8588 (JP)
(72) Inventor: YOSHIMURA, Kenji, Kawasaki-shi Kanagawa 211-8588 (JP)
(74) Representative: Fenlon, Christine Lesley
(86) International application number: PCT/JP2007/059187
(87) International publication number: WO 2008/139521

(56) References cited:
- EP-A2- 0 689 140
- JP-A- 8 249 217
- JP-A- 08 249 217
- JP-A- 2001 184 309
- JP-A- 2002 049 575
- JP-A- 2005 284 497
- US-A1- 2005 216 668

## Description

### TECHNICAL FIELD

The present invention relates to a remote file system in which a terminal device and a server device are communicably connected via a network, and data handed over from an application executed in the terminal device is written in a storage device connected to the server device, and to the terminal device and the server device, and, more particularly to a remote file system that prevents data loss of data written in a storage device when a failure occurs in a server device, improves continuity of an application execution, and improves reliability of write data, and to a terminal device and a server device.

### BACKGROUND ART

Conventionally, in a general file system configured by a server device and a terminal device, when a storage device is accessed on a server device side every time a data writing request is input from a terminal device, its processing cost is increased. To reduce the cost, a cache memory is mounted in the server device and the terminal device, a data operation is performed on the cache memory, and a process of writing data in the storage device is performed. For such file system, there have been proposed various techniques directed to increasing the use efficiency of a cache memory and improving the performance of the entire system. For example, Patent Document 1 discloses a file system in which consistency of data is held by constantly updating the data between cache memories mounted in a server device and a terminal device.

Further, Patent Document 2 discloses a database managing device in which, in a system where a plurality of terminal devices and databases are connected via a database cache to be capable of performing data transmission/reception, one database cache can be used by a plurality of terminal devices by writing data in a data cache into an invariant database part to maintain the consistency between a terminal device state and a database state, and committing the data in the database in the invariant database when a predetermined time interval or a predetermined condition is satisfied.

Moreover, Patent Documents 3 and 4 disclose a distributed server control device in a client/server system in which a terminal device and a server device are connected, where the distributed server control device switches a server device of a connection target to another server device when a heartbeat signal is not detected for a certain period of time. Particularly, Patent Document 3 discloses a technique of recognizing the occurrence of a failure at the server device from the terminal device side to switch a server device of a connection destination, and Patent Document 4 discloses a technique in which a heartbeat signal is used between server devices to perform mutual working-monitoring, and when a failure occurs at one of the server devices, the other device takes over the process.

JP 8 249217 A, EP 0 689 140 A and US 2005/216668 A disclose other file management systems utilizing cache memory and configured to prevent data loss.

Patent Document 1: Japanese Patent No. 2507235

Patent Document 2: Japanese Laid-open Patent Publication No. 09-50393

Patent Document 3: Japanese Laid-open Patent Publication No. 07-56838

Patent Document 4: Japanese Laid-open Patent Publication No. 2006-172050

### DISCLOSURE OF INVENTION

### PROBLEM TO BE SOLVED BY THE INVENTION

However, in conventional techniques represented by Patent Documents 1 to 4, a cache memory that caches write data that is written in a storage device connected to a server device is a volatile storage medium, and thus, when there is a failure at the server device before the write data is written in the storage device and its operation is suspended, the write data stored in the cache memory is lost.

Specifically, in a state that write data that is written in the storage device connected to the server device from an application executed at a terminal device is stored in the cache memory of the server device, and when an operation of the server device is suspended due to the occurrence of a failure at the server device, the write data is lost on the cache memory, and thus there occurs inconveniences such that the application mistakenly recognizes normal data-writing completion despite unsuccessful data writing in the storage device.

Further, even when an alternative server device is prepared for the suspended operation of the server device, there is a case that a process performed at the server device is abnormally ended. Further, there can be a case that takeover of the process to the alternative server is not normally performed and the process ends abnormally.

The present invention has been achieved to solve the above problems (issues), and an object of the invention is to provide a remote file system in which even when there is a failure at a server device before write data is written in a storage device and thus its operation is suspended, the write data stored in a cache memory of the server device is not lost and data loss of the write data is prevented, continuity of an application execution is improved, and reliability of the write data is improved, and also to provide a terminal device and a server device.

### MEANS FOR SOLVING PROBLEM

To solve the problems as described and achieve the object, in accordance with a first aspect of the present invention, as defined in the appended independent claim 1, it is proposed a remote file system in which a terminal device and a server device are communicably connected via a network, and data handed over from an application executed in the terminal device is written in a storage device connected to the server device, the terminal device being connected to two or more server devices. The terminal device includes a managing unit that manages, when storing the data handed over from the application in a terminal device-side cache region provided in the terminal device, the data in a manner that an update flag indicating completion of writing the data in the storage device is turned off and the update flag is associated with the data. The server device includes a writing-completion notifying unit that notifies the managing unit of completion of writing the data in the storage device, upon reception of the data written in the terminal device-side cache region. The managing unit turns on the update flag when completion of writing the data is notified from the writing-completion notifying unit. When the update flag is turned on, the update flag indicates that the associated data is releasable from the cache memory at any time. The terminal device re-transmits a data writing request, when the server to which the data writing request has been sent is down, to an alternative server among the servers, and one of the servers having a highest priority is designated as the alternative server.

In the invention, the managing unit sequentially records a system call corresponding to the data handed over from the application on an unprocessed data list stored in the terminal device-side cache region, and when completion of writing the data is notified from the writing-completion notifying unit, the managing unit deletes the system call corresponding to the data from the unprocessed data list.

In the invention, the storage device is connected to a first server device and a second server device so that the terminal device is connected via any one of the first server device or the second server device among a plurality of server devices and the data can be written in the storage device. The terminal device and the server device further comprise a working monitoring unit that transmits a working notification of own device to another device, and when there is no reception of a working notification from the first server device that is prioritized as a write server device used for writing the data in the storage device, recognizes that there is a failure at the first server device; and a write-server-device changing unit that changes, when it is recognized by the working monitoring unit that there is a failure at the first server device, the write server device from the first server device to the second server device according to a preliminary setting.

In the invention, the terminal device further comprises a re-transmitting unit that, when the write server device is changed from the first server device to the second server device by the write-server-device changing unit, sequentially re-transmits to the second server device the data that is stored in the terminal cache region responding to the system call, according to the system call recorded on the unprocessed data list.

In the invention, the writing-completion notifying unit receives the data written in the terminal device-side cache region for each n (n is a natural number) logic block sizes of a file system and notifies the managing unit of completion of writing the data in the storage device for each of the logic block size. When completion of writing the data for each of the logic block size is notified from the writing-completion notifying unit, the managing unit deletes the data from the terminal device-side cache region for each of the logic block size that is completely written, and when completion of writing all the logic block sizes of the data recorded on the unprocessed data list is notified, the managing unit deletes the system call corresponding to the data from the unprocessed data list.

In the invention, the writing-completion notifying unit receives the data written in the terminal device-side cache region for each file unit and notifies the managing unit of completion of writing the data in the storage device for each of the file unit. When completion of writing the data for each of the file unit is notified from the writing-completion notifying unit, the managing unit deletes the data from the terminal device-side cache region for each of the file unit that is completely written, and also deletes all the system calls corresponding to the data from the unprocessed data list.

In the invention, the writing-completion notifying unit receives the data written in the terminal device-side cache region for each data unit corresponding to the system call unit and notifies the managing unit of completion of writing the data in the storage device for each of the data unit. When completion of writing the data for each of the data unit is notified from the writing-completion notifying unit, the managing unit deletes the data from the terminal device-side cache region for each of the data unit that is completely written, and also deletes the system call corresponding to the data unit from the unprocessed data list.

In accordance with a second aspect of the present invention, as defined in the appended independent claim 8, it is proposed a terminal device that is communicably connected to two or more server devices via a network and that transmits data handed over from an application executed at own device to one of the server devices to write the data in a storage device connected to this server device. The terminal device comprises a managing unit that manages, when storing the data handed over from the application in a terminal device-side cache region provided in own device, the data in a manner that an update flag indicating completion of writing the data in the storage device is turned off and the update flag is associated with the data. When completion of writing the data in the storage device is notified from the server device upon reception of the data written in the terminal device-side cache region, the managing unit turns on the update flag. When the update flag is turned on, the update flag indicates that the associated data is releasable from the cache memory at any time. The terminal device re-transmits a data writing request, when the server to which the data writing request has been sent is down, to an alternative server among the servers, and one of the servers having a highest priority is designated as the alternative server.

In the invention, the managing unit sequentially records a system call corresponding to the data handed over from the application on an unprocessed data list stored in the terminal device-side cache region, and when completion of writing the data is notified from the writing-completion notifying unit, the managing unit deletes the system call corresponding to the data from the unprocessed data list.

In the invention, the terminal device is connected to a first server device and a second server device so that the terminal device is connected via any one of the first server device or the second server device among a plurality of server devices and the data can be written in the storage device. The terminal device further comprises: a working monitoring unit that transmits a working notification of own device to another device, and when there is no reception of a working notification from the first server device that is prioritized as a write server device used for writing the data in the storage device, recognizes that there is a failure at the first server device; and a write-server-device changing unit changes, when it is recognized by the working monitoring unit that there is a failure at the first server device, the write server device from the first server device to the second server device according to a preliminary setting.

The invention further comprises a re-transmitting unit that, when the write server device is changed from the first server device to the second server device by the write-server-device changing unit, sequentially re-transmits to the second server device the data that is stored in the terminal cache region responding to the system call, according to the system call recorded on the unprocessed data list.

### EFFECT OF THE INVENTION

According to the present invention, when completion of data writing is notified from a writing-completion notifying unit, a managing unit turns on an update flag, and thus it becomes possible to recognize normal completion of writing the data in a storage device on a terminal device side and it becomes also possible to hold the data in a terminal device-side cache region as long as the update flag is turned off. Therefore, operational continuity of a remote file system can be improved in preparation for the occurrence of a failure or suspension of a server device. Moreover, it becomes possible to write the data held in the terminal device-side cache region in the storage device via another server device when there is a failure or suspension of a server device, and thus continuity of an application job and certainty of consistency of data can be improved.

According to the present invention, when completion of writing the data is notified from the writing-completion notifying unit, a system call corresponding to the data is deleted from an unprocessed data list. Therefore, only a system call corresponding to the data not completely written is recognized and managed by the unprocessed data list, and it is also possible to prevent resources for the terminal device-side cache region from being pressured by the unprocessed data list.

According to the present invention, when it is recognized by a working monitoring unit that there is a failure at a first server device, a write server device is changed from the first server device to the second server device according to a preliminary setting. Thus, when the first server suspends its operation due to a failure, it becomes possible to automatically change the write server to the second server device, thereby improving operational continuity of the device.

According to the present invention, when the write server device is changed from a first server device to a second server device by a write-server-device changing unit, according to a system call recorded on an unprocessed data list, data stored in a terminal cache region is sequentially re-transmitted to the second server device corresponding to the system call. Thus, when the first server suspends its operation due to a failure, the data stored in the terminal cache region is utilized to promptly re-transmit the data to the second server device, thereby improving operational continuity of the device.

According to the present invention, when completion of data writing for each logic block size of a file system is notified from a writing-completion notifying unit, a managing unit deletes the data from a terminal device-side cache region for each logic block size that is completely written, and when completion of writing all the logic block sizes of the data recorded on the unprocessed data list is notified, the managing unit deletes a system call corresponding to the data from the unprocessed data list. Accordingly, data is frequently deleted from the terminal device-side cache region, thereby preventing resources for the terminal device-side cache region from being pressured by the data.

According to the present invention, when completion of writing data for each file unit is notified from the writing-completion notifying unit, the managing unit deletes data from the terminal device-side cache region for each file unit that is completely written, and also all the system calls corresponding to the data are deleted from the unprocessed data list. Therefore, communication traffic between the terminal device and the server device can be reduced.

According to the present invention, when completion of writing data for each data unit is notified from the writing-completion notifying unit, the managing unit deletes the data from the terminal device-side cache region for each data unit that is completely written, and also all the system calls corresponding to the data unit are deleted from the unprocessed data list. Therefore, while suppressing communication traffic between the terminal device and the server device, resources for the terminal device-side cache region are prevented from being pressured by the data.

### BRIEF DESCRIPTION OF DRAWINGS

FIG. 1 depicts a network configuration of a remote file system and a configuration of function blocks of clients and servers connected to the remote file system according to an embodiment.
FIG. 2 depicts a process outline in which, in the remote file system according to the embodiment, a data writing state of cache data in a storage device is managed at each client.
FIG. 3 is an example of a management table that manages a cache memory area of a client according to the embodiment.
FIG. 4 is an example of a data storage state in the cache memory area of the client according to the embodiment.
FIG. 5 is an example of a transmission queue for transmitting data to a server at the client according to the embodiment.
FIG. 6 depicts a process outline in which, in the remote file system according to the embodiment, a data writing request is re-transmitted from a client to an alternative server.
FIG. 7 is an example of a definition file that defines a priority of server devices in the embodiment.
FIG. 8 depicts a process outline in which, in the remote file system according to the embodiment, a system call is re-transmitted from the client to the alternative server.
FIG. 9 is an example of an unprocessed data list stored in a cache memory area of the client according to the embodiment.
FIG. 10 depicts a process outline in which, in the remote file system according to the embodiment, after a data-write completion notification in the storage device for each logical block size is received from a server, data is deleted from a cache region for each of the logical block size.
FIG. 11 depicts a process outline in which, in the remote file system according to the embodiment, after a data-write completion notification in the storage device with a file unit is received from a server, data is deleted from a cache region according to the file unit.
FIG. 12 depicts a process outline in which, in the remote file system according to the embodiment, after a data-write completion notification in the storage device with a data unit corresponding to a system call unit is received from a server, data is deleted from a cache region according to the data unit.
FIG. 13 is a flowchart of a data managing process procedure performed at the client according to the embodiment.
FIG. 14 is a flowchart of a data transmitting/receiving process procedure performed in the remote file system according to the embodiment.
FIG. 15 is a flowchart of a data writing process procedure of writing data in the storage device, which is performed at the server according to the embodiment.

### EXPLANATIONS OF LETTERS OR NUMERALS

- N: Network
- D: Storage device
- RFS: Remote file system
- C: Client
- C₁: Client 1
- C₂: Client 2
- Cₘ: Client m
- S: Server
- S₁: Server 1
- S₂: Server 2
- Sₙ: Server n
- 10: Application executing unit
- 10₃: Application executing unit a
- 10ₓ: Application executing unit x
- 11: File system unit
- 12: Access exclusive controller
- 13: Data transmitting/receiving unit
- 14: Managing unit
- 15: Cache-memory area section
- 15a: Unprocessed data list
- 15b: Management table
- 16: VFS unit
- 17: Host-working monitoring unit
- 100: File system unit
- 101: Access exclusive controller
- 102: Data transmitting/receiving unit
- 103: Write back unit
- 104: Cache-memory area section
- 105: Host-working monitoring unit

### BEST MODE(S) FOR CARRYING OUT THE INVENTION

Exemplary embodiments of a remote file system, a terminal device, and a server device according to the present invention will be explained below with reference to the accompanying drawings. In the following embodiment, it is assumed that a server/client model in which a plurality of terminal devices (hereinafter, "client(s)") and a plurality of server devices (hereinafter, "server(s)") are connected via a network established by using a high-speed interconnect such as Infiniband^{®} or generally used Ethernet^{®}.

For example, as the server/client model, a storage area network (SAN) is preferable. To the plural servers, a storage device such as a magnetic disk device, an optical disk device, and a magneto-optical disk device is connected in a shared manner.

In a remote file system assumed in the following embodiment, a process is performed in which, in response to a data writing request issued from an application executed at a client, data temporarily stored in a cache memory area of the client is duplicated in a cache memory area of the server and the duplicated data is written in a storage device.

### EMBODIMENT

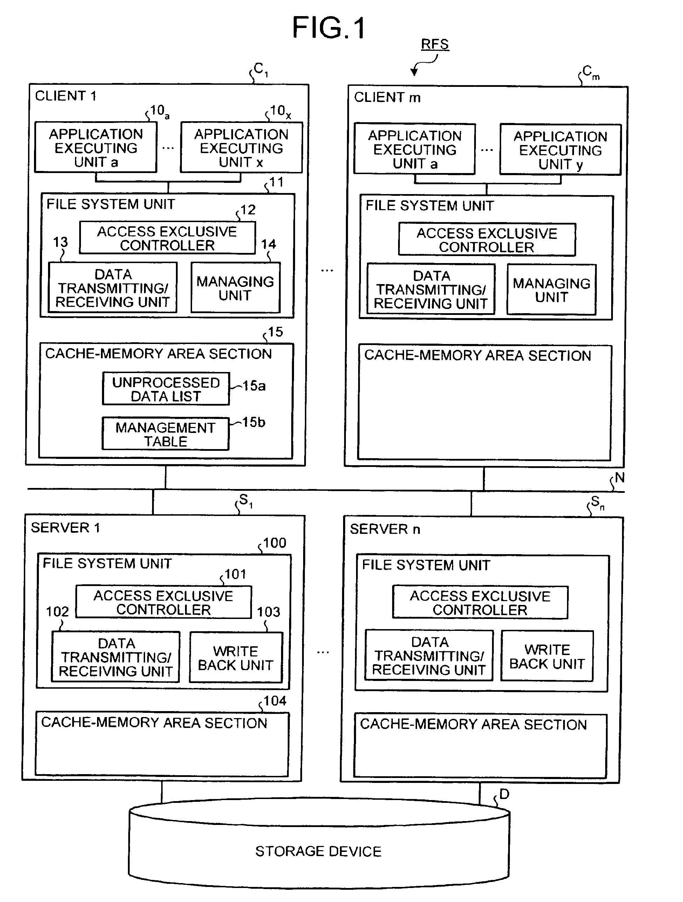

First, a network configuration of the remote file system and a configuration of function blocks of the clients and the servers connected to the remote file system according to an embodiment is described. FIG. 1 depicts the network configuration of the remote file system and the configuration of the function blocks of the clients and the servers connected to the remote file system according to the embodiment.

As depicted in FIG. 1, in a remote file system RFS according to the embodiment, a plurality of clients such as a client 1 C₁, ..., and a client m Cₘ, and a plurality of servers such as a server 1 S₁, ..., and a server n Sₙ are mutually communicably connected via a network N. To the server 1 S₁, ..., and the server n Sₙ, one storage device D is simultaneously connected. When data is written from the client 1 C₁, ..., and the client m Cₘ in a predetermined storage medium in the storage device D, a server having the highest priority according to a definition described in a definition file described below among the server 1 S₁, ..., and the server n Sₙ is designated as a master data-write server.

The functional configuration of each client is described by using the client 1 C₁ that represents all the clients. The client 1 C₁ includes an application executing unit a 10ₐ, ..., and an application executing unit x 10ₓ, and a file system unit 11, and a cache-memory area section 15. From the application executing unit a 10ₐ, ..., and the application executing unit x 10ₓ, data that is accompanied by the application execution is handed over to the file system unit 11, and the data is further written in the cache-memory area section 15.

The file system unit 11 further includes an access exclusive controller 12, a data transmitting/receiving unit 13, and a managing unit 14. The access exclusive controller 12 controls writing in the same file on the cache-memory area section 15 from a plurality of application executing units such as the application executing unit a 10ₐ, ..., and the application executing unit x 10ₓ in a manner to ensure ordering by performing exclusive control or the like. A specific application executing unit among the application executing unit a 10ₐ, ..., and the application executing unit x 10ₓ, can be called "an application executing unit 10" below.

The data transmitting/receiving unit 13 transmits data cached in the cache-memory area section 15 to the master data-write server in the order that a communication header is queued in a transmission queue. In the data transmitting/receiving unit 13, its function is realized by a server-resident program.

The managing unit 14 records a data writing request from the application executing unit a 10ₐ, ..., and the application executing unit x 10ₓ on an unprocessed data list 15a described below. Upon reception of a data-write completion notification from a write back unit 103 of the server 1 S₁ as a master data-write server, among the server 1 S₁, ..., and the server n Sₙ (described below), an update flag of data that is completely written in the storage medium of the storage device D is turned on in a management table described below. When the master data-write server suspends its operation due to a failure, a server having a second highest priority is designated as the master data-write server according to the definition described in the definition file, and the data writing request is transmitted to this server.

The cache-memory area section 15 is a volatile storage unit that caches data output from the application executing unit a 10ₐ, ..., and the application executing unit x 10ₓ, and stores the unprocessed data list 15a on which system calls issued from these application executing units are recorded and a management table 15b that manages the data.

The functional configuration of the servers is described next by using the server 1 S₁ that represents all the servers. The server 1 S₁ includes a file system unit 100 and a cache-memory area section 104. The file system unit 100 further includes an access exclusive controller 101, a data transmitting/receiving unit 102, and the write back unit 103.

The access exclusive controller 101 maintains ordering of the data writing requests from the clients to control writing in the same file. The access exclusive controller 101 has information indicating whether the data held in the cache-memory area section 15 at the client is the latest. Moreover, when the data held in the cache-memory area section 104 is updated by another client, the access exclusive controller 101 notifies a client that writes the data first of this update and causes that client to discard the data held in the cache-memory area section 15 of the client.

The data transmitting/receiving unit 102 receives the data transmitted from the client 1 C₁, ..., and the client m Cₘ. Further, when the data is transmitted from the client while the data on the cache-memory area section 104 is being written in the storage medium of the storage device D, it is probable that data contradiction is caused. Therefore, while the data is being written in the storage medium, the data is exclusively controlled in a block unit in the cache-memory area section 104. In the data transmitting/receiving unit 102, its function is realized by a server-resident program.

The write back unit 103 writes the data on the cache-memory area section 104, in the storage medium of the storage device D. When this writing is completed, the managing unit 14 at the client is notified of the completion. The data mentioned here includes not only user data but also meta data.

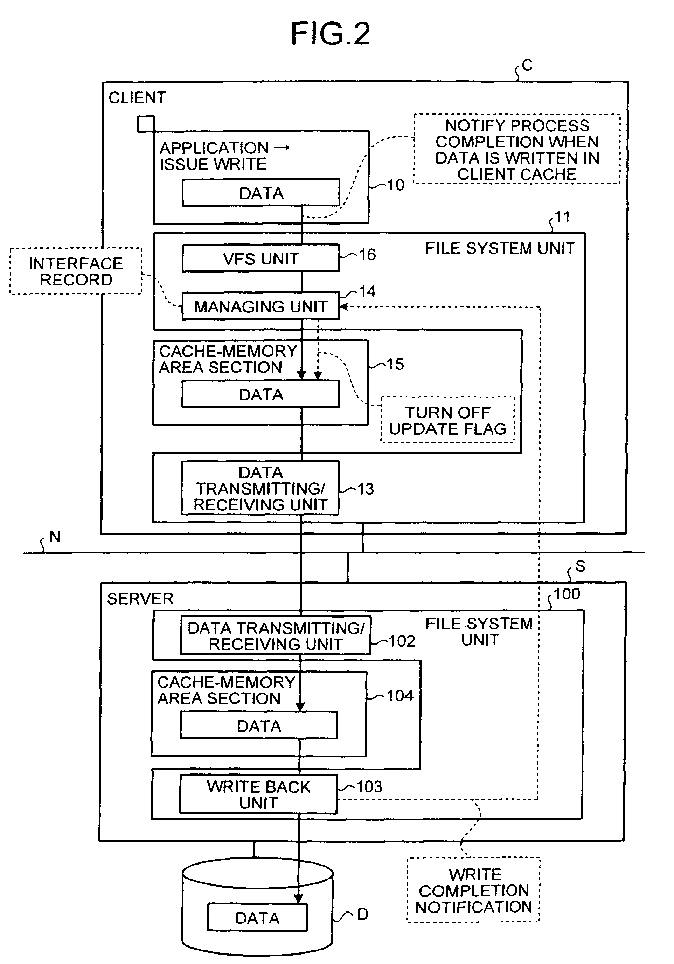

A process outline in which, in the remote file system according to the embodiment, a data writing state of the cache data in the storage device is managed at each client is described next. FIG. 2 depicts a process outline in which, in the remote file system according to the embodiment, a data writing state of the cache data in the storage device is managed at each client. Hereinafter, the client 1 C₁, ..., and the client m Cₘ are collectively called "client C", and a server used as a data write server in the storage device D, among out of the server 1 S₁, ..., and the server n Sₙ, is a server S. All the processes and operations described with reference to FIG. 2 are asynchronously performed.

As depicted in FIG. 2, data of "write" system call, for example, issued from an application by the application executing unit 10 operated on the client C undergoes a virtual file system (VFS) unit 16 (VFS layer), and thereafter, the data is handed over to the managing unit 14. At this time, the managing unit 14 stores the data (interface) regarding the system call and the data in the cache-memory area section 15. The data (interface) regarding the system call is, while turning off the update flag, stored in the management table 15b on the cache-memory area section 15, and the data is stored in the cache-memory area section 15.

Upon completion of storage of the data in the cache-memory area section 15 of the client, "write successful" is returned to the application executing unit 10 from which the "write" system call and the data are originally output. As a result, the application executing unit 10 is released from the process relating to the data writing in the storage medium of the storage device D only after the completion of storage of the system call and the data in the cache-memory area section 15, and becomes capable of continuously performing other processes.

The data transmitting/receiving unit 13 of the client C transmits the data stored in the cache-memory area section 15, to the data transmitting/receiving unit 102 of the server S. The data transmitting/receiving unit 102 of the server S stores the data received from the data transmitting/receiving unit 13 of the client C, in the cache-memory area section 104 of the server S. Moreover, the write back unit 103 of the server S writes the data on the cache-memory area section 104 in the storage medium of the storage device D. Upon completion of this writing, the write back unit 103 notifies the managing unit 14 of the client C of the completion.

The managing unit 14 that has received a data-write completion notification from the write back unit 103 turns on the update flag of the data on the management table stored in the cache-memory area section 15 of the client C. Thereby, the data is releasable from the cache-memory area section 15 at any time. It is preferable that the data is withheld from releasing as long as there is room for resources for the cache-memory area section 15 in preparation for a case that the data is re-utilized on the client C (for example, a case that the data is re-transmitted to an alternate server of the server S due to a failure at the server S).

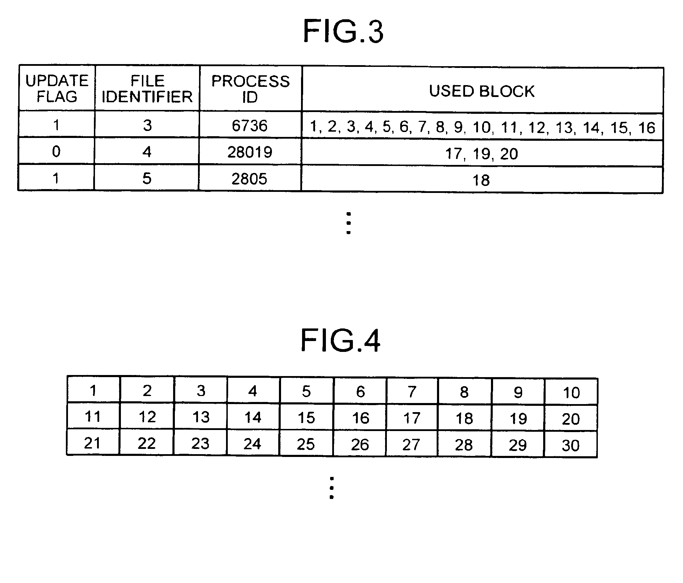

The management table that manages the cache memory area of the client according to the embodiment is described next. FIG. 3 is an example of the management table that manages the cache memory area of the client according to the embodiment. The management table 15b is stored in the cache-memory area section 15 of the client C. By working with the management table 15b, the managing unit 14 can manage a use status of the cache-memory area section 15, that is, whether data is dirty (whether it is data written in the storage device D).

As depicted in FIG. 3, the management table 15b includes columns for "update flag", "file identifier", "process ID", and "used block". The "update flag" is rendered "0 (turned off)" when the data output from the application executing unit 10 is stored in the cache-memory area section 15. That flag is rendered "1 (turned on)" when the data is finally written in the storage device D by the write back unit 103 of the server S and the managing unit 14 receives the write completion notification.

The "file identifier" is an identifier used for uniquely specifying a file within the remote file system RFS. The "process ID" is an ID used for uniquely specifying an application that outputs the data within the client 1 C₁. It is possible to access the user information based on the "process ID".

The "used block" is information indicating a block in which the data is stored in the cache-memory area section 15. For example, as depicted in FIG. 4, the number used for identifying a block imparted to each block is described in the "used block".

The cache-memory area section 15 is managed in a unit that is called "page". For example, when a cache page size is 32 KB, if data of 512 KB is output from the application executing unit 10, the managing unit 14 secures a 512-KB page size, that is, the cache-memory area section 15 of 16 pages.

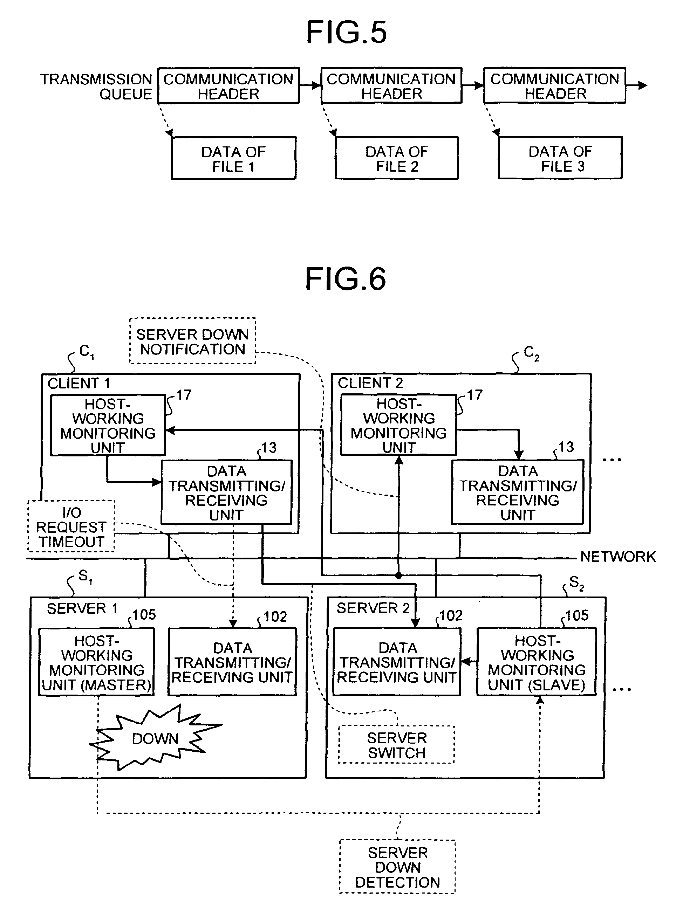

The transmission queue for transmitting data to the server at the client according to the embodiment is described next. FIG. 5 is an example of the transmission queue for transmitting data to the server at the client according to the embodiment.

The system call is issued from the application executing unit 10. The managing unit 14 that has received the request copies the cache data on the client 1 C₁, and further connects the request to the transmission queue of the data transmitting/receiving unit 13 to transfer the data to the cache-memory area section 104 on the server 1 S₁ side. The communication header includes information for communicating between the server 1 S₁ and the client 1 C₁, information of file data for transmission, and an address to the file data. The data transmitting/receiving unit 13 regularly checks the transmission queue, and when the transmission queue is linked to the request, transmits the corresponding data according to the order, to the data transmitting/receiving unit 102 on the server 1 S₁ side.

A process outline in which, in the remote file system according to the embodiment, a data writing request is re-transmitted from a client to an alternative server is described next. FIG. 6 depicts a process outline in which, in the remote file system according to the embodiment, the data writing request is re-transmitted from the client to the alternative server.

A server down caused due to the occurrence of a failure at the server 1 S₁ is detected when the request from each client is timed-out or detected by a host-working monitoring unit 17 or a host-working monitoring unit 105 operating on each host (server and client). The host-working monitoring unit 17 or the host-working monitoring unit 105 is a service by a resident program operated at the client or the server.

The host-working monitoring unit 17 or the host-working monitoring unit 105 performs a working detection when the client transmits a heartbeat at a regular interval to a server that has wished the request. Over the entire remote file system RFS, the single host-working monitoring unit 17 or the host-working monitoring unit 105, which serves as the master, receives an abnormal notification from the host-working monitoring units 17 or the host-working monitoring units 105 operating on hosts over the entire system, and notifies the host-working monitoring unit 17 or the host-working monitoring unit 105 operating on the other hosts, the respective host-working monitoring units 17 or the host-working monitoring units 105 can comprehend the working status of hosts over the entire system.

Further, the heartbeat is regularly issued from the host-working monitoring unit 17 or the host-working monitoring unit 105, which is the master, to the other host-working monitoring units 17 or the host-working monitoring units 105. When there is no query from the master, the host-working monitoring unit 17 or the host-working monitoring unit 105, which is a slave, recognizes that the master is down, and thereafter operates as the master.

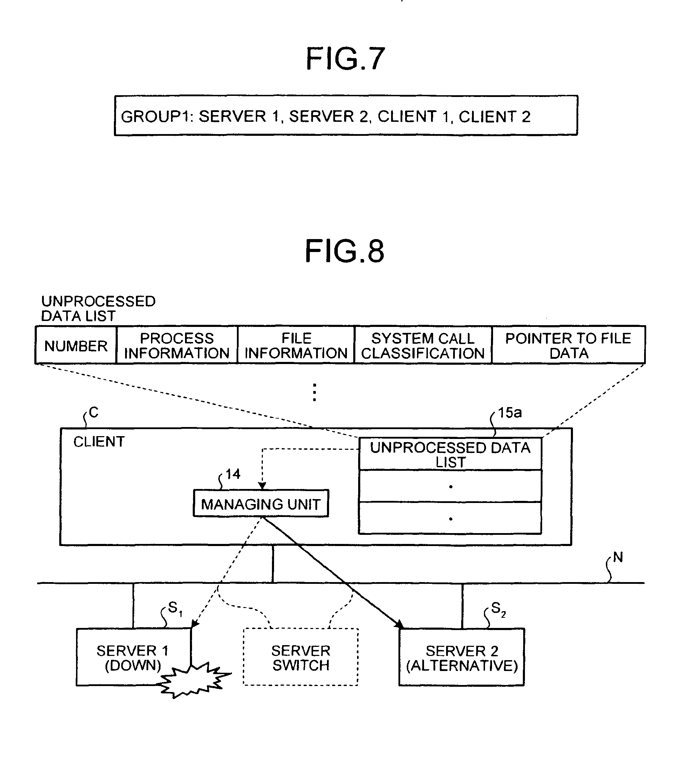

When the data transmitting/receiving unit 13 detects a timeout, the data transmitting/receiving unit 13 notifies the host-working monitoring unit 17, and switches the servers after host-working-status recognitions match over the entire system. The master and the slave are set preliminarily with respect to a definition file depicted in FIG. 7.

In FIG. 6, when the client 1 C₁ detects that the server 1 S₁ is down, the request is re-transmitted to a server 2 S₃ as an alternative server in the order from the data that has not been written in the storage device D. The data transmitting/receiving unit 13 that has received the notification re-transmits the request to another working server. A state that the request is not made means simple switching, and while the request is being made, the data is re-transmitted to another server.

The definition file that defines the priority of the server devices according to the embodiment is described next. FIG. 7 is an example of the definition file that defines the priority of the server devices according to the embodiment. As depicted in FIG. 7, the servers are defined first, and thereafter the clients are described next to the servers.

In the server descriptions, a server described nearer the left has a higher priority; the leftmost is a maser and the second leftmost is a slave. The same applies when there are a plurality of slaves, that is, the server described nearer the left has a higher priority.

A process outline in which, in the remote file system according to the embodiment, the system call is re-transmitted from the client to the alternative server is described next. FIG. 8 depicts a process outline in which, in the remote file system according to the embodiment, the system call is re-transmitted from the client to the alternative server.

A memory used at the server is a volatile storage medium, and thus data that is not normally written completely in the storage medium of the storage device D is lost along with the server down at the server 1 S₁. Therefore, when a function of redoing the system call from a start is added at the client, ensuring of file writing and job continuity can be improved.

Specifically, at the client C, the interface of the system call issued from the application executing unit 10 is recorded on a memory or on a disk on the client side. This recording is performed in an order that the application receives the request at the client. That is, the unprocessed data list 15a is created. Note that not all of the system calls require recording.

This recording is notified from a write back demon on the server side (server 1 S₁) at a time point when the recording is written to the storage medium of the storage device D, and is discarded. Until that time point, the recording is held on the client C side. When the client C detects the server down at the server 1 S₁, the system call process is performed again on another server (the server 2 S₂) based on the recording. In this way, job continuity and operational continuity can be ensured.

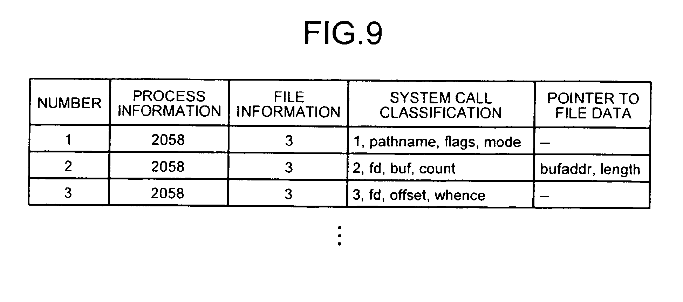

The unprocessed data list stored in the cache memory area of the client according to the embodiment is described next. FIG. 9 is an example of the unprocessed data list stored in the cache memory area of the client according to the embodiment.

The unprocessed data list 15a has columns for "number", "process information", "file information", "system call classification", and "pointer to file data". The "number" is a unique numerical value for identifying an entry on the unprocessed data list 15a. The "process information" is a unique process ID within one client, and the user information can be accessed from this information.

The "file information" is an identifier for identifying a file that the remote file system RFS handles, and a unique numerical value within the remote file system RFS. The "system call classification" records an identifier that can specify the system call classification and an argument designated by the system call. The identifier is a unique numerical value as follows. That is, "open system call" = "1", "write system call" = "2", and "lseek system call" = "3".

The "pointer to file data" is information indicating a storage location in the cache-memory area section 15 of the data designated by the system call. For example, the data handed over by the "write system call" is released with the end of the system call, and thus the data needs to be copied and saved in another address. The "pointer to file data" indicates the copied address.

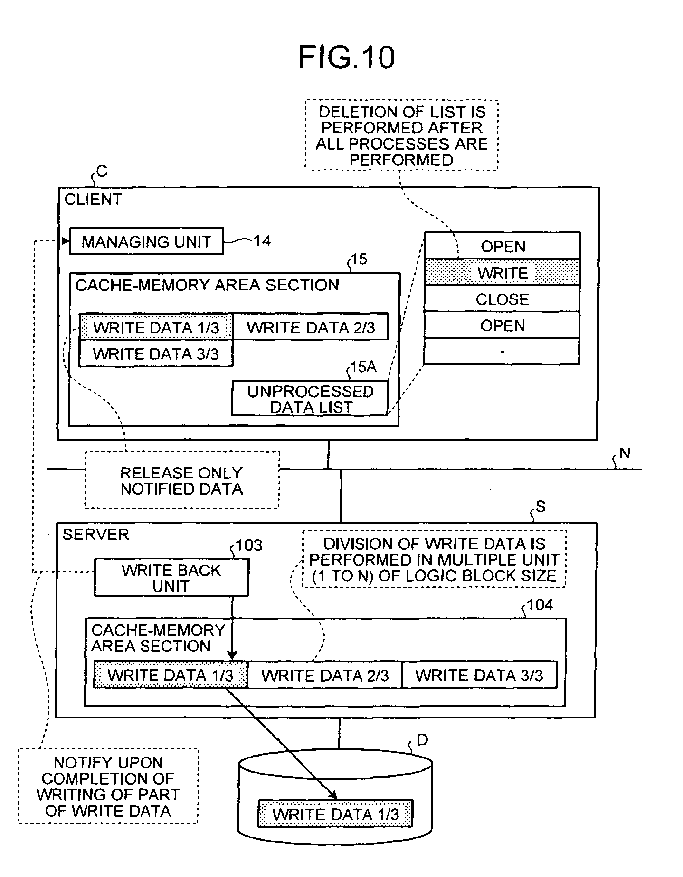

Next, a process outline in which, in the remote file system according to the embodiment, after a data-write completion notification in the storage device for each logical block size of the file system is received from the server, the data is deleted from the cache region for each logical block size is described. FIG. 10 depicts a process outline in which, in the remote file system according to the embodiment, after a data-write completion notification in the storage device for each logical block size is received from the server, the data is deleted from the cache region for each of the logical block size.

In order that the data write server is changed and re-transmitted for writing, the request and the data from the application executing unit 10 not written in the storage medium of the storage device D need to be held on the cache-memory area section 15 at the client. However, there is a limit on the data that can be held depending on a mounted memory capacity at the client.

When it is not possible to secure resources for saving the data that is used for re-transmitting in the cache-memory area section 15, the application execution by the application executing unit 10 is stopped. Thus, it is necessary to promptly erase the unprocessed data list when the resources on the client become depleted. A unit by which the data is deleted from the cache region needs to be appropriately set based on a load of the network N, a processing capability over the entire remote file system RFS, a processing capability of the client C, a resource vacancy of the cache-memory area section 15 of the client C, and a processing capability of the server S.

As an example thereof, as depicted in FIG. 10, a unit by which the data is deleted from the cache region is a logic block size of the file system. There are n (n is a natural number) logic block sizes in the file system. The unprocessed data list 15a, which is managing information, does not have a large data amount. On the other hand, a data amount of the file data is large. Thus, for each logic block size or unit by which the file system manages the file, the data-write completion notification is communicated between the client C and the server S. That is, at each completion of writing the data in the storage device D for each logic block size, its completion is notified and the file data is released. In this way, it becomes possible to quickly secure a vacant region in the cache-memory area section 15, which can be put to use again. Whether to communicate by using how many logic block sizes as a unit assumed to be set by a parameter that can be variably set.

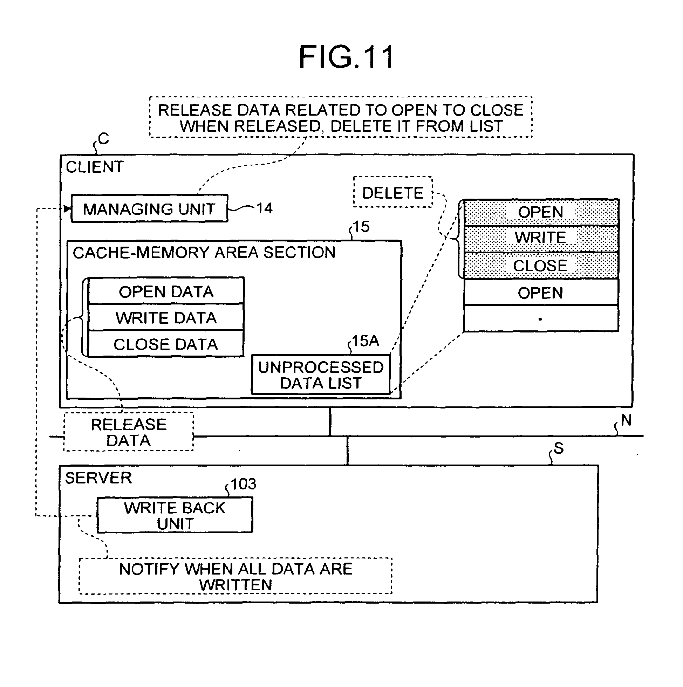

The unit by which the data is deleted from the cache region can be a file unit. That is, as depicted in FIG. 11, the items from "open" to "close" in a series of system calls on the unprocessed data list 15a are held at the client C. In this way, the number of times of communications for the data-write completion notification can be reduced, and thus a system load can be suppressed.

This is preferably employed for an operation in which an I/O amount is small, because there is a tendency that an erasing timing is delayed as a result of collective erasure of the unprocessed data list at the client 1 C₁.

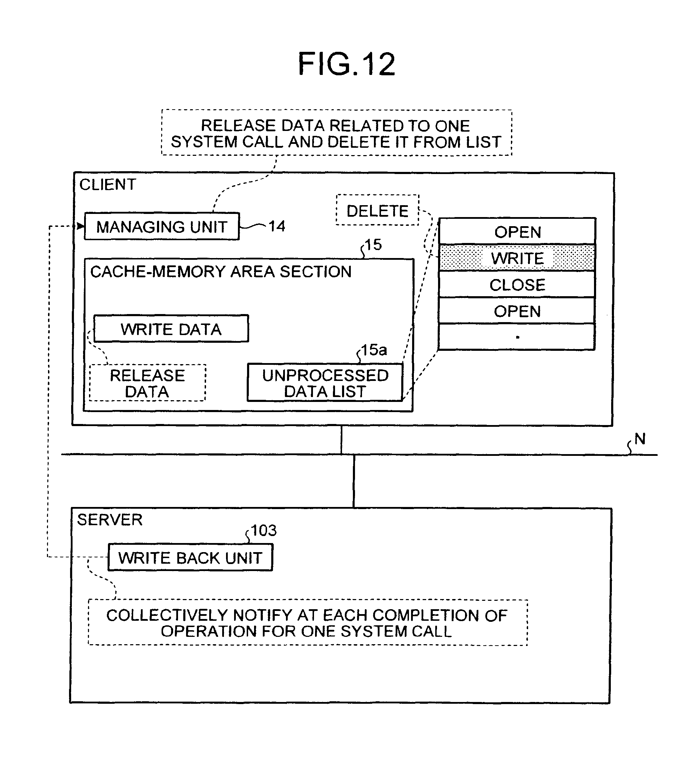

Further, the unit by which the data is deleted from the cache region can be a system call unit. That is, as depicted in FIG. 12, the data-write completion notification is communicated for each entry on the unprocessed data list. For example, as depicted in FIG. 12, upon completion of writing the "write data" corresponding to a "write" command in the storage device D, the "write" command is deleted from the unprocessed data list, and also, the "write data" is erased from the cache-memory area section 15. According thereto, it becomes possible to reduce the number of times of communications, reduce a system load, and achieve the promptness of securing the vacancy in the cache region.

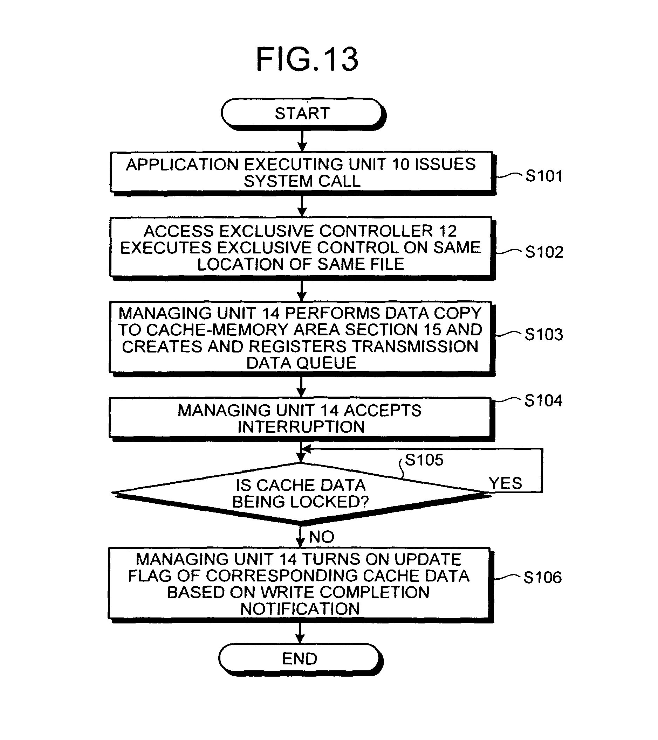

A data managing process performed at the client according to the embodiment is described next. FIG. 13 is a flowchart of a procedure of the data managing process performed at the client according to the embodiment. First, as depicted in FIG. 13, the application executing unit 10 at the client C issues the system call (Step S101). Thereafter, the access exclusive controller 12 executes the exclusive control on the same location of the same file of the cache-memory area section 15 (Step S102).

The managing unit 14 then performs data copy to the cache-memory area section 15, and creates and registers the transmission data queue (Step S103). This is followed by a process done by the managing unit 14 that accepts an interruption of the data-write completion notification from the write back unit 103 at the server S (Step S104).

The managing unit 14 then determines whether the cache data that has received the data-write completion notification at Step S104 is locked (Step S105). When it is determined that the cache data is locked (YES at Step S105), the process at Step S105 is repeated, and when it is not determined that the cache data is locked (NO at Step S105), the managing unit 14 turns on the update flag of the corresponding cache data based on the write completion notification (Step S106). As a result, the cache data can be released from the cache-memory area section 15 at any time.

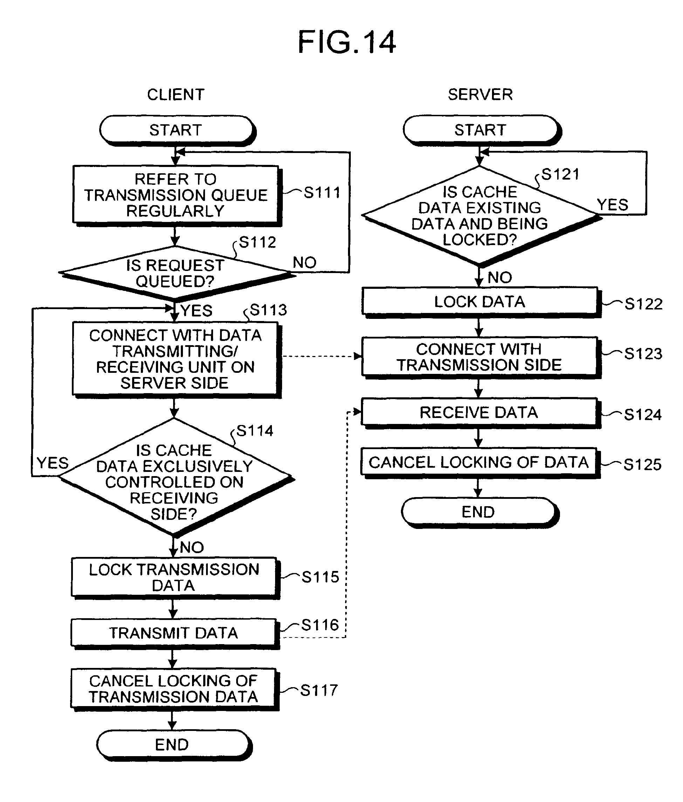

A data transmitting/receiving process performed in the remote file system according to the embodiment is described next. FIG. 14 is a flowchart of a data transmitting/receiving process procedure performed in the remote file system according to the embodiment. First, as depicted in FIG. 14, at the client C, the data transmitting/receiving unit 13 regularly refers to the transmission queue (Step S111).

Thereafter, the data transmitting/receiving unit 13 determines whether the request is queued in the transmission queue (Step S112). When it is determined that the request is queued (YES at Step S112), the process moves to Step S113, and when it is not determined that the request is queued (NO at Step S112), the process moves to Step S111.

At Step S113, the data transmitting/receiving unit 13 establishes communication with the data transmitting/receiving unit 102 of the server S. The process at Step S113 is synchronized with that at Step S123 on the server S side (described below). The data transmitting/receiving unit 13 then determines whether the cache data is exclusively controlled at the server S on the receiving side (Step S114). When the cache data is exclusively controlled at the server 1 S₁ on the receiving side (YES at Step S114), the process moves to Step S113, and when it is not determined that the cache data is exclusively controlled at the server S on the receiving side (NO at Step S114), the process moves to Step S115.

At Step S115, the access exclusive controller 12 locks the transmission data. The data transmitting/receiving unit 13 then transmits the data to the server S (Step S116). The process at Step S116 is synchronized with that at Step S124 on the server S side (described below). Thereafter, the data transmitting/receiving unit 13 cancels locking of the transmission data (Step S117).

Meanwhile, at the server S, the data transmitting/receiving unit 102 determines whether the cache data is existing data and locked in the cache-memory area section 104 (Step S121). When it is determined that the cache data is the existing data and locked in the cache-memory area section 104 (YES at Step S121), the process at Step S121 is repeated, and when it is not determined that the cache data is the existing data and locked in the cache-memory area section 104 (NO at Step S121), the process moves to Step S122.

At Step S122, the access exclusive controller 101 performs data locking on the cache data (Step S122) and establishes communication with the client C on the transmission side (Step S123). The data transmitting/receiving unit 102 then receives the data transmitted from the client C (Step S124). This is followed by canceling data locking performed at Step S122 (Step S125).

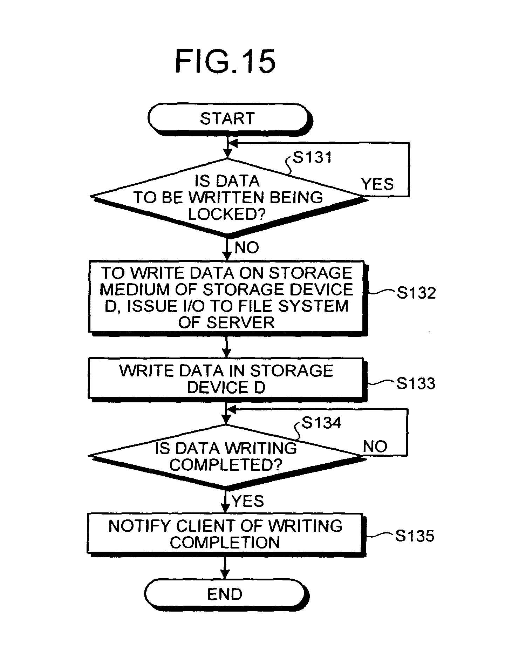

A process of writing data in the storage device performed at the server according to the embodiment is described next. FIG. 15 is a flowchart of a process procedure of writing data in the storage device, which is performed at the server according to the embodiment. First, as depicted in FIG. 15, the write back unit 103 determines whether the data to be written is being locked (Step S131). When it is determined that the data to be written is being locked (YES at Step S131), the process at Step S131 is repeated, and when it is not determined that the data to be written is being locked (NO at Step S131), the process moves to Step S132.

At Step S132, to write the data in the storage medium of the storage device D, the write back unit 103 issues an I/O to the file system of the server (Step S132). The write back unit 103 then writes the data in the storage device D (Step S133).

The write back unit 103 then determines whether the data writing in the storage device D is completed (Step S134). When it is determined that the data writing in the storage device D is completed (YES at Step S134), the process moves to Step S135, and when it is not determined that the data writing in the storage device D is completed (NO at Step S134), the process at Step S134 is repeated.

At Step S135, the write back unit 103 notifies the managing unit 14 of the client C of the completion of writing.

Among the respective processes described in the above embodiment, all or a part of the processes explained as being performed automatically can be performed manually, or all or a part of the processes explained as being performed manually can be performed automatically by a known method. In addition, process procedures, control procedures, specific names, and information including various kinds of data and parameters mentioned in the above embodiment can be arbitrarily changed unless otherwise specified.

The respective constituent elements of the respective devices depicted in the drawings are functionally conceptual, and physically the same configuration is not always necessary. That is, the specific mode of distribution and integration of the devices are not limited to the depicted ones, and all or a part thereof can be functionally or physically distributed or integrated in an arbitrary unit, according to various kinds of load and the status of use.

Furthermore, all or an arbitrary part of each processing function performed by respective devices can be realized by a central processing unit (CPU) (or a microcomputer such as a micro processing unit (MPU) and a micro controller unit (MCU)), or by a program analyzed and executed in the CPU (or a microcomputer such as a MPU and MCU), or realized as hardware by a wired logic.

A program that realizes each processing function performed at respective devices can be distributed by recording execution codes on various types of storage media, and the program can be also distributed by providing the execution codes via an electric communication line.

### INDUSTRIAL APPLICABILITY

The present invention is useful when it is desired that data loss of write data is prevented without losing the write data stored in a cache memory of a server device, continuity of executing an application and reliability of the write data are improved, even if a failure occurs in the server device before the write data is written in a storage device and its operation is suspended.

## Claims

1. A remote file system (RFS) in which a terminal device (C₁) and a server device (S₁) are communicably connected via a network (N), and data handed over from an application executed in the terminal device (C₁) is written in a storage device (D) connected to the server device (S₁), the terminal device (C₁) being connected to two or more server devices (S₁-Sₙ) , wherein
the terminal device (C₁) includes a managing unit (14) that manages, when storing the data handed over from the application in a terminal device-side cache region (15) provided in the terminal device (C₁), the data in a manner that an update flag indicating completion of writing the data in the storage device (D) is turned off and the update flag is associated with the data,
the server device includes a writing-completion notifying unit (103) that notifies the managing unit (14) of completion of writing the data in the storage device (D), upon reception of the data written in the terminal device-side cache region (15),
the managing unit (14) turns on the update flag when completion of writing the data is notified from the writing-completion notifying unit (103), and when the update flag is turned on, the update flag indicates that the associated data is releasable from the cache memory at any time, and
the terminal device (C₁) re-transmits a data writing request, when the server (S₁) to which the data writing request has been sent is down, to an alternative server (S₂) among the servers (S₁-Sₙ), and one of the servers having a highest priority is designated as the alternative server.

2. The remote file system (RFS) according to claim 1, wherein the managing unit (14) sequentially records a system call corresponding to the data handed over from the application on an unprocessed data list (15a) stored in the terminal device-side cache region (15), and when completion of writing the data is notified from the writing-completion notifying unit (103), the managing unit (14) deletes the system call corresponding to the data from the unprocessed data list (15a).

3. The remote file system (RFS) according to claim 2, wherein
the storage device (D) is connected to a first server device (S₁) and a second server (S₂) device so that the terminal device (C₁) is connected via any one of the first server device (S₁) or the second server device (S₂) among the two or more server devices (S₁-Sₙ) and the data can be written in the storage device (D), and
the terminal device (C₁) and the server device (S₁) further comprise:
a working monitoring unit (17, 105) that transmits a working notification of own device to another device, and when there is no reception of a working notification from the first server device (S₁) that is prioritized as a write server device used for writing the data in the storage device (D), recognizes that there is a failure at the first server device (S₁); and
a write-server-device changing unit that changes, when it is recognized by the working monitoring unit (17, 105) that there is a failure at the first server device (S₁), the write server device from the first server device (S₁) to the second server (S₂) device according to a preliminary setting.

4. The remote file system (RFS) according to claim 3, wherein the terminal device (C₁) further comprises a re-transmitting unit that, when the write server device is changed from the first server (S₁) device to the second server device (S₂) by the write-server-device changing unit, sequentially re-transmits to the second server device (S₂) the data that is stored in the terminal cache region responding to the system call, according to the system call recorded on the unprocessed data list (15a).

5. The remote file system (RFS) according to claim 4, wherein
the writing-completion notifying unit (103) receives the data written in the terminal device-side cache region for each n (n is a natural number) logic block sizes of a file system and notifies the managing unit (14) of completion of writing the data in the storage device (D) for each of the logic block size, and
when completion of writing the data for each of the logic block size is notified from the writing-completion notifying unit (103), the managing unit (14) deletes the data from the terminal device-side cache region (15) for each of the logic block size that is completely written, and when completion of writing all the logic block sizes of the data recorded on the unprocessed data list (15a) is notified, the managing unit (14) deletes the system call corresponding to the data from the unprocessed data list (15a).

6. The remote file system (RFS) according to claim 4, wherein
the writing-completion notifying unit (103) receives the data written in the terminal device-side cache region (15) for each file unit and notifies the managing unit (14) of completion of writing the data in the storage device (D) for each of the file unit, and
when completion of writing the data for each of the file unit is notified from the writing-completion notifying unit (103), the managing unit (14) deletes the data from the terminal device-side cache region (15) for each of the file unit that is completely written, and also deletes all the system calls corresponding to the data from the unprocessed data list (15a).

7. The remote file system (RFS) according to claim 4, wherein
the writing-completion notifying unit (103) receives the data written in the terminal device-side cache region (15) for each data unit corresponding to the system call unit and notifies the managing unit (14) of completion of writing the data in the storage device (D) for each of the data unit, and
when completion of writing the data for each of the data unit is notified from the writing-completion notifying unit (103), the managing unit (14) deletes the data from the terminal device-side cache region (15) for each of the data unit that is completely written, and also deletes the system call corresponding to the data unit from the unprocessed data list (15a).

8. A terminal device (C₁) that is communicably connected to two or more server devices (S₁-Sₙ) via a network (N) and that transmits data handed over from an application executed at own device to one of the server devices (S₁-Sₙ) to write the data in a storage device (D) connected to this server device, the terminal device (C₁) comprising
a managing unit (14) that manages, when storing the data handed over from the application in a terminal device-side cache region (15) provided in own device, the data in a manner that an update flag indicating completion of writing the data in the storage device (D) is turned off and the update flag is associated with the data, wherein
when completion of writing the data in the storage device is notified from the server device upon reception of the data written in the terminal device-side cache region (15), the managing unit (14) turns on the update flag, and when the update flag is turned on, the update flag indicates that the associated data is releasable from the cache memory at any time, and
the terminal device (C₁) re-transmits a data writing request, when the server (S₁) to which the data writing request has been sent is down, to an alternative server (S₂) among the servers (S₁-Sₙ) , and one of the servers having the highest priority is designated as the alternative server.

9. The terminal device (C₁) according to claim 8, wherein the managing unit (14) sequentially records a system call corresponding to the data handed over from the application on an unprocessed data list (15a) stored in the terminal device-side cache region (15), and when completion of writing the data is notified from the writing-completion notifying unit (103), the managing unit (14) deletes the system call corresponding to the data from the unprocessed data list (15a).

10. The terminal device (C₁) according to claim 9, wherein
the terminal device (C₁) is connected to a first server device (S₁) and a second server (S₂) device so that the terminal device (C₁) is connected via any one of the first server device (S₁) or the second server device (S₂) among the two or more server devices (S₁-Sₙ) and the data can be written in the storage device (D), and
the terminal device (C₁) further comprises:
a working monitoring unit (17) that transmits a working notification of own device to another device, and when there is no reception of a working notification from the first server device (S₁) that is prioritized as a write server device used for writing the data in the storage device (D), recognizes that there is a failure at the first server device (S₁) ; and
a write-server-device changing unit changes, when it is recognized by the working monitoring unit (17) that there is a failure at the first server device (S₁), the write server device from the first server device (S₁) to the second server device (S₂) according to a preliminary setting.

11. The terminal device (C₁) according to claim 10, further comprising a re-transmitting unit that, when the write server device is changed from the first server device (S₁) to the second server device (S₂) by the write-server-device changing unit, sequentially re-transmits to the second server device (S₂) the data that is stored in the terminal cache region (15) responding to the system call, according to the system call recorded on the unprocessed data list (15a).

## Patentansprüche

1. Ferndateisystem (RFS), in dem eine Endgerätvorrichtung (C₁) und eine Servervorrichtung (S₁) in Kommunikation über ein Netzwerk (N) miteinander verbunden sind, und von einer in der Endgerätvorrichtung (C₁) ausgeführten Anwendung übergebene Daten in eine mit der Servervorrichtung (S₁) verbundene Speichervorrichtung (D) geschrieben werden, wobei die Endgerätvorrichtung (C₁) mit zwei oder mehr Servervorrichtungen (S₁ bis Sₙ) verbunden ist, wobei
die Endgerätvorrichtung (C₁) eine Verwaltungseinheit (14) beinhaltet, die beim Speichern der von der Anwendung übergebenen Daten in einen Endgerätvorrichtungs-seitigen Cache-Bereich 15, der in der Endgerätvorrichtung (C₁) vorgesehen ist, die Daten in einer Weise verwaltet, dass ein Aktualisierungsflag, das den Abschluss des Schreibens der Daten in die Speichervorrichtung (d) anzeigt, abgeschaltet wird, und das Aktualisierungsflag mit den Daten assoziiert wird, die Servervorrichtung eine Schreibabschluss-Notifizierungseinheit (103) beinhaltet, welche der Verwaltungseinheit (14) den Abschluss des Schreibens der Daten in der Speichervorrichtung (D) beim Empfang der in den Endgerätvorrichtungs-seitigen Cache-Bereich (15) geschriebenen Daten mitteilt,
die Verwaltungseinheit (14) das Aktualisierungsflag einschaltet, wenn der Abschluss des Schreibens der Daten aus der Schreibabschluss-Notifizierenungseinheit (103) mitgeteilt wird, und wenn das Aktualisierungsflag eingeschaltet wird, das Aktualisierungsflag anzeigt, dass die assoziierten Daten aus dem Cache-Speicher jederzeit freisetzbar sind, und
die Endgerätvorrichtung (C₁) eine Datenschreibanforderung, wenn der Server (S₁), an den die Datenschreibanforderung gesendet worden ist, heruntergefahren ist, an einen alternativen Server (S₂) von den Servern (S₁-Sₙ) neu sendet, und einer der Server mit einer höchsten Priorität als der alternative Server bezeichnet wird.

2. Ferndateisystem (RFS) gemäß Anspruch 1, wobei die Verwaltungseinheit (14) sequentiell einen Systemaufruf, der mit den von der Anmeldung übergebenen Daten korrespondiert, in einer im Endgerätvorrichtungs-seitigen Cache-Bereich (15) gespeicherten unprozessierten Datenliste aufzeichnet, und wenn der Abschluss des Schreibens der Daten aus der Schreibabschluss-Notifizierungseinheit (103) mitgeteilt wird, die Verwaltungseinheit (14) den, den Daten entsprechenden Systemaufruf aus der unprozessierten Datenliste (15a) löscht.

3. Ferndateisystem (RFS) gemäß Anspruch 2, wobei
die Speichervorrichtung (D) mit einer ersten Servervorrichtung (S₁) und einem zweiten Servervorrichtung (S₂) so verbunden ist, dass die Endgerätvorrichtung (C₁) über die erste Servervorrichtung (S₁) oder die zweite Servervorrichtung (S₂) von den zwei oder mehr Servervorrichtungen (S₁ bis Sₙ) verbunden ist und die Daten in die Speichervorrichtung (D) geschrieben werden können, und
die Endgerätvorrichtung (C₁) und die Servervorrichtung (S₁) weiter umfassen:
eine Arbeitsüberwachungseinheit (17, 105), die eine Arbeitsmitteilung der eigenen Vorrichtung an eine andere Vorrichtung sendet und, wenn es keinen Empfang der Arbeitsmitteilung aus der ersten Servervorrichtung (S₁) gibt, die als eine zum Schreiben der Daten der Speichervorrichtung (D) verwendete Schreibservervorrichtung priorisiert wird, erkennt, dass es ein Versagen an der ersten Servervorrichtung (S₁) gibt; und
eine Schreibservervorrichtungs-Änderungseinheit, die, wenn durch die Arbeitsüberwachungseinheit (17, 105) festgestellt wird, dass es ein Versagen an der ersten Servervorrichtung (S₁) gibt, die Schreibenservervorrichtung von der ersten Servervorrichtung (S₁) zur zweiten Servervorrichtung (S₂) wechselt, gemäß einer vorläufigen Einstellung.

4. Ferndateisystem (RFS) gemäß Anspruch 3, wobei die Endgerätvorrichtung (C₁) weiterhin eine Wiederaussendeeinheit umfasst, die, wenn die Schreibservervorrichtung durch die Schreibservervorrichtungs-Änderungseinheit von der ersten Servervorrichtung (S₁) zur zweiten Servervorrichtung (S₂) gewechselt wird, die Daten, die im, auf einen Systemaufruf antwortenden Endgerät-Cache-Bereich gespeichert sind, anhand des in der unprozessierten Datenliste (15a) aufgezeichneten Systemaufrufs neu sendet.

5. Ferndateisystem (RFS) gemäß Anspruch 4, wobei
die Schreibabschluss-Notifizierungseinheit (103) die in den Endgerätvorrichtungs-seitigen Cache-Bereich geschriebenen Daten für alle n (n ist eine natürliche Zahl) Logikblockgrößen eines Dateisystems empfängt und der Verwaltungseinheit (14) den Abschluss des Schreibens der Daten in der Speichervorrichtung (D) für jede der Logikblockgrößen mitteilt, und
beim Abschluss des Schreibens der Daten für jede der Logikblockgrößen aus der Schreibabschluss-Notifizierungseinheit (103) mitgeteilt wird, die Verwaltungseinheit (14) die Daten aus dem Endgerätvorrichtungs-seitigen Cache-Bereich (15) für jede Logikblockgröße, die vollständig beschrieben ist, löscht, und wenn der Abschluss des Schreibens aller Logikblockgrößen von in der unprozessierten Datenliste (15a) aufgezeichneten Daten mitgeteilt wird, die Verwaltungseinheit (14) den, den Daten aus der unprozessierten Datenliste (15a) entsprechenden Systemaufruf löscht.

6. Ferndateisystem (RFS) gemäß Anspruch 4, wobei
die Schreibabschluss-Notifizierungseinheit (103) die in den Endgerätvorrichtungs-seitigen Cache-Bereich (15) geschriebenen Daten für jede Dateieinheit empfängt und der Verwaltungseinheit (14) den Abschluss des Schreibens der Daten in der Speichervorrichtung (D) für jede Dateieinheit mitteilt, und
wenn der Abschluss des Schreibens von Daten für jede Dateieinheit aus der Schreibabschluss-Notifizierungseinheit (103) mitgeteilt wird, die Verwaltungseinheit (14) die Daten aus dem Endgerätvorrichtungs-seitigen Cache-Bereich (15) für jede Dateieinheit löscht, die vollständig geschrieben ist, und alle, den Daten aus der unprozessierten Datenliste (15a) entsprechenden Systemaufrufe löscht.

7. Ferndateisystem (RFS) gemäß Anspruch 4, wobei
die Schreibabschluss-Notifizierungseinheit (103) die in den Endgerätvorrichtungs-seitigen Cache-Bereich (15) geschriebenen Daten für jede, der Systemaufrufeinheit entsprechende Dateneinheit empfängt, und der Verwaltungseinheit (14) den Abschluss des Schreibens der Daten in die Speichereinheit (D) für jede Dateneinheit mitteilt, und
wenn der Abschluss des Schreibens der Daten für jede Dateneinheit aus der Schreibenabschluss-Notifizierungseinheit (103) mitgeteilt wird, die Verwaltungseinheit (14) die Daten aus dem Endgerätvorrichtungs-seitigen Cache-Bereich (15) für jede Dateneinheit löscht, die vollständig geschrieben ist, und auch den der Dateneinheit entsprechenden Systemaufruf aus der unprozessierten Datenliste (15a) löscht.

8. Endgerätvorrichtung (C₁), die mit zwei oder mehr Servervorrichtungen (S₁ bis Sₙ) über ein Netzwerk (N) in Kommunikation stehend verbunden ist, und die aus einer in einer eigenen Vorrichtung ausgeführten Anwendung übergebenen Daten an eine der Servervorrichtungen (S₁ bis Sₙ) sendet, um die Daten in die Speichervorrichtung (D), die mit dieser Servervorrichtung verbunden ist, zu schreiben, wobei die Endgerätvorrichtung (C₁) umfasst:
eine Verwaltungseinheit (14), die beim Speichern der aus der Anwendung in einem in einer eigenen Vorrichtung bereitgestellten Endgerätvorrichtungs-seitigen Cache-Bereich (15) übergebenen Daten die Daten in einer Weise verwaltet, dass ein Aktualisierungsflag, das den Abschluss des Schreibens der Daten in die Speichervorrichtung (D) anzeigt, abgeschaltet wird, und das Aktualisierungsflag mit den Daten assoziiert ist, wobei
wenn der Abschluss des Schreibens der Daten in die Speichervorrichtung aus der Servervorrichtung beim Empfang der in den Endgerätvorrichtungs-seitigen Cache-Bereich (15) geschriebenen Daten mitgeteilt wird, die Verwaltungseinheit (14) das Aktualisierungsflag einschaltet, und wenn das Aktualisierungsflag eingeschaltet ist, das Aktualisierungsflag anzeigt, dass die assoziierten Daten aus dem Cache-Speicher zu jeder Zeit freisetzbar sind, und
die Endgerätvorrichtung (C₁) eine Datenschreibanforderung, wenn der Server (S₁), an den die Datenschreibanforderung gesendet worden ist, heruntergefahren ist, an einen alternativen Server (S₂) von den Servern (S₁ bis Sₙ) neu sendet und einer der Server mit der höchsten Priorität als der alternative Server bezeichnet wird.

9. Endgerätvorrichtung (C₁) gemäß Anspruch 8, wobei die Verwaltungseinheit (14) sequentiell einen Systemaufruf, der den aus der Anwendung übergebenen Daten entspricht, in einer unprozessierten Datenliste 815a) aufzeichnet, die im Endgerätvorrichtungs-seitigen Cache-Bereich (15) gespeichert ist, und wenn der Abschluss des Schreibens der Daten aus der Schreibabschluss-Notifizierungseinheit (103) mitgeteilt wird, die Verwaltungseinheit (14) den, den Daten aus der unprozessierten Datenliste (15a) entsprechenden Systemaufruf löscht.

10. Endgerätvorrichtung (C₁) gemäß Anspruch 9, wobei
die Endgerätvorrichtung (C₁) mit einer ersten Servervorrichtung (S₁) und einem zweiten Servervorrichtung (S₂) so verbunden ist, dass die Endgerätvorrichtung (C₁) über die erste Servervorrichtung (S₁) oder die zweite Servervorrichtung (S₂) von den zwei oder mehr Servervorrichtungen (S₁ bis Sₙ) verbunden ist und die Daten in die Speichervorrichtung (D) geschrieben werden können, und
die Endgerätvorrichtung (C₁) weiter umfasst:
eine Arbeitsüberwachungseinheit (17), die eine Arbeitsmitteilung der eigenen Vorrichtung an eine andere Vorrichtung sendet und, wenn es keinen Empfang der Arbeitsmitteilung aus der ersten Servervorrichtung (S₁) gibt, die als eine zum Schreiben der Daten der Speichervorrichtung (D) verwendete Schreibservervorrichtung priorisiert wird, erkennt, dass es ein Versagen an der ersten Servervorrichtung (S₁) gibt; und
eine Schreibservervorrichtungs-Änderungseinheit, die, wenn durch die Arbeitsüberwachungseinheit (17) festgestellt wird, dass es ein Versagen an der ersten Servervorrichtung (S₁) gibt, die Schreibenservervorrichtung von der ersten Servervorrichtung (S₁) zur zweiten Servervorrichtung (S₂) wechselt, gemäß einer vorläufigen Einstellung.

11. Endgerätvorrichtung (C₁) gemäß Anspruch 10, weiterhin eine Wiederaussendeeinheit umfassend, die, wenn die Schreibservervorrichtung durch die Schreibservervorrichtungs-Änderungseinheit von der ersten Servervorrichtung (S₁) zur zweiten Servervorrichtung (S₂) gewechselt wird, die Daten, die im, auf einen Systemaufruf antwortenden Endgerät-Cache-Bereich (15) gespeichert sind, anhand des in der unprozessierten Datenliste (15a) aufgezeichneten Systemaufrufs neu sendet.

## Revendications

1. Système de fichiers à distance (RFS) dans lequel un dispositif de terminal (C₁) et un dispositif de serveur (S₁) sont reliés en établissant une communication par l'intermédiaire d'un réseau (N), et des données transférées d'une application exécutée dans le dispositif de terminal (C₁) sont écrites dans un dispositif de stockage (D) relié au dispositif de serveur (S₁), le dispositif de terminal (C₁) étant relié à deux serveurs ou plus (S₁-Sₙ) , dans lequel
le dispositif de terminal (C₁) comprend une unité de gestion (14) qui gère, lors du stockage des données transférées depuis l'application dans une région cache côté dispositif de terminal (15) prévue dans le dispositif de terminal (C₁), les données de manière qu'un drapeau de mise à jour indiquant l'achèvement de l'écriture des données dans le dispositif de stockage (D) est désactivé et le drapeau de mise à jour est associé aux données,
le dispositif de serveur comprend une unité de notification d'achèvement d'écriture (103) qui notifie à l'unité de gestion (14) l'achèvement de l'écriture des données dans le dispositif de stockage (D), lors de la réception des données écrites dans la région cache côté dispositif de terminal (15),
l'unité de gestion (14) active le drapeau de mise à jour lorsque l'achèvement de l'écriture des données est notifié depuis l'unité de notification d'achèvement d'écriture (103), et lorsque le drapeau de mise à jour est activé, le drapeau de mise à jour indique que les données associées peuvent être libérées de la mémoire cache à tout moment, et
le dispositif de terminal (C₁) retransmet une demande d'écriture de données, lorsque le serveur (S₁) auquel la requête d'écriture de données a été envoyée est hors service, à un autre serveur (S₂) parmi les serveurs (S₁-Sₙ), et un des serveurs possédant une priorité très élevée est désigné en tant qu'autre serveur.

2. Système de fichiers à distance (RFS) selon la revendication 1, dans lequel l'unité de gestion (14) enregistre séquentiellement un appel système correspondant aux données transmises depuis l'application sur une liste de données non traitées (15a) mémorisée dans la région cache côté dispositif de terminal (15), et lorsque l'achèvement de l'écriture des données est notifié depuis l'unité de notification d'achèvement d'écriture (103), l'unité de gestion (14) supprime l'appel système correspondant aux données de la liste de données non traitées (15a).

3. Système de fichiers à distance (RFS) selon la revendication 2, dans lequel
le dispositif de stockage (D) est relié à un premier dispositif de serveur (S₁) et à un second dispositif de serveur (S₂) de sorte que le dispositif de terminal (C₁) est relié par l'intermédiaire de l'un quelconque du premier dispositif de serveur (S₁) ou du second dispositif de serveur (S₂) parmi les deux dispositifs de serveur ou plus (S₁-Sₙ) et les données peuvent être écrites dans le dispositif de stockage (D), et
le dispositif de terminal (C₁) et le dispositif de serveur (S₁) comportent en outre :
une unité de surveillance de travail (17, 105) qui transmet une notification de travail de son propre dispositif à un autre dispositif, et lorsqu'il n'y a aucune réception d'une notification de travail provenant du premier dispositif de serveur (S₁) qui est prioritaire en tant que dispositif de serveur d'écriture utilisé pour écrire les données dans le dispositif de stockage (D), reconnaît qu'il y a une défaillance dans le premier dispositif de serveur (S₁) ; et
une unité de changement de dispositif de serveur d'écriture qui change, lorsqu'il est reconnu par l'unité de surveillance de travail (17, 105) qu'il y a une défaillance dans le premier dispositif de serveur (S₁), le dispositif de serveur d'écriture passant du premier dispositif de serveur (S₁) au second dispositif de serveur (S₂) selon un réglage préliminaire.

4. Système de fichiers à distance (RFS) selon la revendication 3, dans lequel le dispositif de terminal (C₁) comporte en outre une unité de retransmission qui, lorsque le dispositif de serveur d'écriture est changé passant du premier dispositif de serveur (S₁) au second dispositif de serveur (S₂) grâce à l'unité de changement de dispositif de serveur d'écriture, retransmet séquentiellement au second dispositif de serveur (S₂) les données qui ont été mémorisées dans la région cache de terminal répondant à l'appel système, conformément à l'appel système enregistré sur la liste de données non traitées (15a).

5. Système de fichiers à distance (RFS) selon la revendication 4, dans lequel
l'unité de notification d'achèvement d'écriture (103) reçoit les données écrites dans la région cache côté dispositif de terminal pour chaque n (n est un nombre naturel) taille de bloc logique d'un système de fichiers et notifie à l'unité de gestion (14) l'achèvement de l'écriture de données dans le dispositif de stockage (D) pour chacune des tailles de bloc logique, et
lorsque l'achèvement d'écriture des données pour chacune des tailles de bloc logique est notifié depuis l'unité de notification d'achèvement d'écriture (103), l'unité de gestion (14) supprime les données de la région cache côté dispositif de terminal (15) pour chacune des tailles de bloc logique qui est complètement écrite, et lorsque l'achèvement d'écriture de toutes les tailles de bloc logique des données enregistrées sur la liste de données non traitées (15a) est notifié, l'unité de gestion (14) supprime l'appel système correspondant aux données de la liste de données non traitées (15a).

6. Système de fichiers à distance (RFS) selon la revendication 4, dans lequel
l'unité de notification d'achèvement d'écriture (103) reçoit les données écrites dans la région cache côté dispositif de terminal (15) pour chaque unité de fichier et notifie à l'unité de gestion (14) l'achèvement de l'écriture des données dans le dispositif de stockage (D) pour chacune des unités de fichier, et
lorsque l'achèvement d'écriture des données pour chacune des unités de fichier est notifié depuis l'unité de notification d'achèvement d'écriture (103), l'unité de gestion (14) supprime les données de la région cache côté dispositif de terminal (15) pour chacune des unités de fichier qui est complètement écrite, et supprime également tous les appels système correspondant aux données de la liste de données non traitées (15a).

7. Système de fichiers à distance (RFS) selon la revendication 4, dans lequel
l'unité de notification d'achèvement d'écriture (103) reçoit les données écrites dans la région cache côté dispositif de terminal (15) pour chaque unité de données correspondant à l'unité d'appel système et notifie à l'unité de gestion (14) l'achèvement de l'écriture des données dans le dispositif de stockage (D) pour chacune des unités de données, et
lorsque l'achèvement d'écriture des données pour chacune des unités de données est notifié depuis l'unité de notification d'achèvement d'écriture (103), l'unité de gestion (14) efface les données de la région cache côté dispositif de terminal (15) pour chacune des unités de données qui est complètement écrite, et efface également l'appel système correspondant à l'unité de données de la liste de données non traitées (15a).

8. Dispositif de terminal (C₁) qui est relié en établissant une communication à deux dispositifs de serveur ou plus (S₁-Sₙ) par l'intermédiaire d'un réseau (N) et qui transmet des données transférées depuis une application exécutée sur son propre dispositif à l'un des dispositifs de serveur (S₁-Sₙ) pour écrire les données dans un dispositif de stockage (D) relié à ce dispositif de serveur, le dispositif de terminal (C₁) comportant
une unité de gestion (14) qui gère, lors de la mémorisation des données transférées depuis l'application dans une région cache côté dispositif de terminal (15) prévue dans son propre dispositif, les données de manière qu'un drapeau de mise à jour indiquant l'achèvement de l'écriture des données dans le dispositif de stockage (D) est désactivé et le drapeau de mise à jour est associé aux données, dans lequel
lorsque l'achèvement d'écriture des données dans le dispositif de stockage est notifié depuis le dispositif de serveur à la réception des données écrites dans la région cache côté dispositif de terminal (15), l'unité de gestion (14) active le drapeau de mise à jour, et lorsque le drapeau de mise à jour est activé, le drapeau de mise à jour indique que les données associées peuvent être libérées depuis la mémoire cache à tout moment, et
le dispositif de terminal (C₁) retransmet une demande d'écriture de données, lorsque le serveur (S₁) auquel la requête d'écriture de données a été envoyée est hors service, à un autre serveur (S₂) parmi les serveurs (S₁-Sₙ), et l'un des serveurs possédant la plus haute priorité est désigné en tant qu'autre serveur.

9. Dispositif de terminal (C₁) selon la revendication 8, dans lequel l'unité de gestion (14) enregistre séquentiellement un appel système correspondant aux données transférées depuis l'application sur une liste de données non traitées (15a) mémorisée dans la région cache côté dispositif de terminal (15), et lorsque l'achèvement d'écriture des données est notifié depuis l'unité de notification d'achèvement d'écriture (103), l'unité de gestion (14) supprime l'appel système correspondant aux données de la liste de données non traitées (15a).

10. Dispositif de terminal (C₁) selon la revendication 9, dans lequel
le dispositif de terminal (C₁) est relié à un premier dispositif de serveur (S₁) et à un second dispositif de serveur (S₂) de sorte que le dispositif de terminal (C₁) est relié par l'intermédiaire de l'un quelconque du premier dispositif de serveur (S₁) ou du second dispositif de serveur (S₂) parmi les deux dispositifs de serveur ou plus (S₁-Sₙ) et les données peuvent être écrites dans le dispositif de stockage (D), et
le dispositif de terminal (C₁) comporte en outre:
une unité de surveillance de travail (17) qui transmet une notification de travail de son propre dispositif à un autre dispositif, et lorsqu'il n'y a pas de réception d'une notification de travail depuis le premier dispositif de serveur (S₁) qui est prioritaire en tant que dispositif de serveur d'écriture utilisé pour l'écriture des données dans le dispositif de stockage (D), reconnaît qu'il y a une défaillance dans le premier dispositif de serveur (S₁) ; et
une unité de changement de dispositif de serveur d'écriture change, lorsqu'il est reconnu par l'unité de surveillance de travail (17) qu'il existe une défaillance dans le premier dispositif de serveur (S₁), le dispositif de serveur d'écriture passant du premier dispositif de serveur (S₁) au second dispositif de serveur (S₂) selon un réglage préliminaire.

11. Dispositif de terminal (C₁) selon la revendication 10, comportant en outre une unité de retransmission qui, lorsque le dispositif de serveur d'écriture est changé passant du premier dispositif de serveur (S₁) au second dispositif de serveur (S₂) grâce à l'unité de changement de dispositif de serveur d'écriture, retransmet séquentiellement au second dispositif de serveur (S₂) les données qui sont stockées dans la région cache de terminal (15) répondant à l'appel système, selon l'appel système enregistré sur la liste de données non traitées (15a).
